# EUROPÄISCHE PATENTSCHRIFT

(11) **EP 1 056 799 B1**
(45) Veröffentlichungstag und Bekanntmachung des Hinweises auf die Patenterteilung: **24.04.2002**
(21) Anmeldenummer: 98962392.1
(22) Anmeldetag: 24.11.1998
(51) Int. Cl.: C08G 69/14, C08G 69/46

(54) **VERFAHREN ZUR HERSTELLUNG VON POLYAMIDEN**
POLYAMIDE PRODUCTION PROCESS
PROCEDE POUR LA PRODUCTION DE POLYAMIDES

(30) Priorität: 25.11.1997 DE 19752181
(43) Veröffentlichungstag der Anmeldung: 06.12.2000
(73) Patentinhaber: BASF AKTIENGESELLSCHAFT, 67056 Ludwigshafen (DE)
(72) Erfinder: HÜNGER, Hans-Harald, D-67158 Ellerstadt (DE); LUDWIG, Alfons, D-37671 Höxter (DE); NEUBERG, Rainer, D-67125 Dannstadt-Schauernheim (DE); PIPPER, Gunter, D-67098 Bad Dürkheim (DE); SAUER, Thomas, D-67246 Dirmstein (DE); WILMS, Axel, D-67256 Weisenheim (DE)
(74) Vertreter: Kinzebach, Werner, Dr.
(86) Internationale Anmeldenummer: EP9807579
(87) Internationale Veröffentlichungsnummer: WO9926997

(56) Entgegenhaltungen:
- EP-A- 0 306 872
- EP-A- 0 745 631
- EP-A- 0 771 834

## Beschreibung

Die vorliegende Erfindung betrifft ein Verfahren zur Herstellung von Polyamiden aus einem Gemisch aus mindestens einem Lactam und Wasser unter polyamidbildenden Bedingungen, wobei man während der Polymerisation mindestens eine adiabatische Entspannung vornimmt.

Polyamid, das zum großen Teil durch Polymerisation von caprolactam hergestellt wird, enthält je nach Temperatur im Gleichgewicht 8 bis 15% Caprolactam und dessen Oligomere. Diese stören die weitere Verarbeitung und werden daher meist nach der Granulierung durch Extraktion mit Wasser, caprolactamhaltigem Wasser oder Alkohol oder Behandlung mit Inertgasen oder Vakuumbehandlung entfernt.

Bei der Extraktion mit Wasser fällt üblicherweise ein Extraktwasser mit etwa 2 bis 15 Gew.-% Caprolactam und dessen oligomeren an, das aus Gründen der Kostenersparnis und des Umweltschutzes aufgearbeitet wird, wobei man das Capralactam und dessen Oligomere wieder in die Polymerisation zurückführt.

Demgemäß sind beispielsweise in der DD-A-213 936, DE-A-43 21 683 und US-A-4 049 638 Verfahren zur Polycaprolactamherstellung beschrieben, die den Einsatz von Caprolactam mit bis zu 15 % Wassergehalt in der Polymerisation erlauben. Die EP-A-745 631 offenbart die Wiederverwendung von wäßrigen Extraktlösungen unter Zusatz geringer Mengen einer Di- oder Polycarbonsäure, da sonst der Extrakt langsamer polymerisiert als Caprolactam.

Da der Extrakt auch erhebliche Anteile an cyclischen Oligomeren enthält, die bei der Polymerisation unverändert bleiben, wurden verschiedene Verfahren zur Spaltung dieser Oligomeren bzw. Überführung in lineare Oligomeren vorgeschlagen, Die Oligomeren werden üblicherweise mit Phosphorsäure oder durch hohe Temperaturen gespalten. So beschreibt die US-A-5 077 381 ein Verfahren zur Spaltung der Oligomeren bei Temperaturen von 220 bis 290 °C, vorzugsweise unter erhöhtem Druck. Die Verwendung von Essigsäure und ortho-Phosphorsäure zur Oligomerenspaltung ist z. B. in der DD-A-213 936 beschrieben.

vor der Rückführung in die Polymerisation muß die üblicherweise etwa 10 Gew.-%ige Extraktlösung zunächst aufgearbeitet, d. h. in der Regel aufkonzentriert werden. Die Aufarbeitung erfolgt normalerweise durch Abdestillieren des Wassers. Die DE-A-25 01 348 beschreibt die Aufkonzentrierung unter Ausschluß von Luftsauerstoff, wobei vor der Aufkonzentrierung auf mehr als 70 Gew.-% dem Extraktwasser frisches Caprolactam zugesetzt wird. Die EP-A-123 881 offenbart den Zusatz von Caprolactam zu der Extraktlösung vor Beginn der Aufkonzentrierung, wodurch ein Ausfallen von Oligomeren vermindert wird.

Die Aufkonzentrierung erfolgt normalerweise in zwei Stufen, wobei in einer ersten Stufe die 10%-ige Lösung mit herkömmlichen Eindampfvorrichtungen auf etwa 75 - 80% Caprolactam und Oligomeren aufkonzentriert wird. Nach dem weiteren Eindampfen der Lösung auf >98 % wird die Lösung sofort polymerisiert. Die wässrige Lösung von Caprolactam und dessen Oligomeren ist bei Konzentrationen oberhalb von 70 bis 80% nicht lagerstabil, da vor allem die Oligomere ausfallen.

Bei Anwendung dieses Aufkonzentrierungsverfahrens auf Extraktwasser von pigmentierten Polyamiden ergeben sich jedoch Schwierigkeiten. Dem Polyamid werden nämlich vor der Granulierung, vorzugsweise schon während der Polymerisation, zur Mattierung TiO₂-Pigmente zugesetzt. Diese sind zur Verbesserung der Stabilität gegen UV-Licht und zur Einstellung von bestimmten Eigenschaften, wie Dispergierverhalten und Teilchengröße zusätzlich mit anorganischen Additiven oberflächenbehandelt bzw. beschichtet. Bei der Extraktion des Polyamidgranulats werden diese anorganischen Hilfsstoffe zum Teil mit dem Caprolactam und dessen Oligomeren extrahiert und scheiden sich dann bei der Aufkonzentrierung des Extraktwassers insbesondere an den Oberflächen der Wärmetauscher ab. Dadurch verkürzt sich die Betriebszeit der Eindampfanlage erheblich und zudem besteht die Gefahr, dass sich der Wärmetauscher zusetzt. Vergleichbare Probleme der Belegung von Wärmetauscherflächen ergeben sich während der Wasserverdampfung in der Polymerisationsstufe, wenn das Konzentrat wieder in die Caprolactampolymerisation zurückgeführt wird, weil auch das Konzentrat diese anorganischen Bestandteile noch enthält.

Zur Lösung dieser Probleme schlägt die EP 306 872 vor, Pigmente zu verwenden, die weniger als 0,1 Gew.-% in Wasser bei 100 °C lösliche Bestandteile enthalten. Diese Einschränkung der Auswahl der Pigmente ist jedoch nachteilig.

Der Erfindung liegt daher die Aufgabe zugrunde, ein verbessertes Verfahren zur Aufarbeitung und Weiterverarbeitung des Extraktwassers von Polyamiden, insbesondere pigmentierten Polyamiden, bereitzustellen, das einfach und ohne die erwähnten Probleme durchführbar ist und ein Extraktkonzentrat ergibt, das wieder in die Polymerisation zurückgeführt werden kann.

Überraschenderweise wurde nun gefunden, dass die Aufgabe gelöst wird, wenn man das Extraktwasser auf einen Gehalt von höchstens 85 Gew.-% Extrakt aufkonzentriert und diese Lösung im Verhältnis von 1:1 bis 1:8 mit frischem Lactam versetzt. Das erhaltene Gemisch enthält dann 0,5 bis 13 Gew.-% Wasser. Es kann in die Polymerisation zurückgeführt werden, ohne dass die erwähnten Probleme auftreten, wenn das Wasser während der Polymerisation durch adiabatische Entspannung entfernt wird.

Gegenstand der vorliegenden Erfindung ist daher ein Verfahren zur Herstellung von Polyamiden aus mindestens einem Lactam, insbesondere Caprolactam, und gegebenenfalls weiteren Monomeren und gegebenenfalls üblichen Zusatz- und Füllstoffen, wobei das Verfahren dadurch gekennzeichnet ist, dass man
a) das Extraktwasser aus der Extraktion von Polyamid auf einen Extraktgehalt von höchstens 85 Gew.-% aufkonzentriert,
b) den Wassergehalt des erhaltenen Konzentrates durch Zugabe von frischem Lactam auf 0,5 bis 13 Gew.-% einstellt,
c) das erhaltene Gemisch der Polymerisation unter polyamidbildenden Bedingungen unterwirft und
d) während der Polymerisation mindestens eine adiabatische Entspannung zur Verringerung des Wassergehaltes vornimmt.

Das erfindungsgemäße Verfahren ist im Vergleich zum Stand der Technik wesentlich weniger störanfällig, einfacher und kostengünstiger. Bei Einsatz von Extraktwasser, das aus der Extraktion von oigmenthaltigem Polyamid stammt, wird die Ausscheidung anorganischer Bestandteile aus der Extraktlösung und die Bildung eines Belags aus diesen Bestandteilen, insbesondere an Wärmetauscherflächen, vermieden. Weiter hat sich gezeigt, dass die Polymerisation aufgrund der Zusammensetzung des eingesetzten Gemisches beschleunigt wird.

Die bei der Polyamidextraktion anfallenden Extraktwässer besitzen im Allgemeinen einen Gehalt an organischen und gegebenenfalls anorganischen Bestandteilen von 4 bis 15 Gew.-%. Um in die Polymerisation zurückgeführt werden zu können, müssen diese Extraktwässer zunächst eingedampft werden. Dies erfolgt in an sich bekannter weise in einer ein- oder mehrstufigen Eindampfanlage mit kurzer Verweilzeit, beispielsweise in einem Robertverdampfer, Fallfilmverdampfer, Dünnschichtverdampfer oder Umlaufverdampfer. Das Eindampfen erfolgt bis zu einem Extraktgehalt von höchstens 85 Gew.-%, weil bei dieser Konzentration noch keine Ausfällungen der gelösten Bestandteile zu beobachten sind. Vorzugsweise dampft man auf einen Extraktgehalt von 60 bis 85 Gew.-%, insbesondere 70 bis 85 Gew.-%, ein. Die Eindampftemperaturen liegen dabei im Allgemeinen im Bereich von 103 bis 115 °C, vorzugsweise 107 bis 112 °C (bei Normaldruck). Im Allgemeinen wird das Eindampfen kontinuierlich durchgeführt.

Besonders bevorzugt wird dem Extraktwasser bereits vor der Aufkonzentrierung frisches Lactam zugesetzt, insbesondere dann, wenn die Extraktion des Polyamids nicht mit caprolactamhaltigem Wasser durchgeführt wurde. Dies hat den Vorteil, dass das Extraktkonzentrat schon während der Aufkonzentrierung gegen Oligomerenausscheidungen stabilisiert ist. Das Gewichtsverhältnis von zugesetztem Caprolactam zu Extraktgehalt wird dabei im Bereich von 0,1 bis 1,5, vorzugsweise 0,5 bis 1, gewählt.

Das nach der Aufkonzentrierung erhaltene Konzentrat (Extraktlösung) hat im Allgemeinen eine Temperatur im Bereich von 107 bis 112 °C und wird anschließend mit dem zur Polymerisation vorgesehenen Lactam vermischt. Man verwendet soviel Lactam, dass das resultierende Gemisch einen Wassergehalt von 0,5 bis 13 Gew.-%, vorzugsweise 0,5 bis 10 Gew.-%, besonders bevorzugt 0,8 bis 7 Gew.-%, insbesondere 1 bis 4 Gew.-% und besonders bevorzugt 1,9 bis 3,5 Gew.-% aufweist. Um diesen Wassergehalt einzustellen, wird das Konzentrat mit dem Lactam im Allgemeinen im Gewichtsverhältnis von 1:1 bis 1:12, vorzugsweise 1:1 bis 1:10 und insbesondere 1:1 bis 1:8, vermischt. Der hohe Lactamgehalt (im Allgemeinen im Bereich von 79 bis 95 Gew.-%) verbessert die Löslichkeit der in dem Gemisch enthaltenen Oligomeren, so dass keine Ausfällungen zu beobachten sind. Das Gemisch ist daher stabil und kann zumindest mehrere Stunden bis zur Weiterverarbeitung gelagert werden, ohne dass Verstopfungen in den Anlageteilen zu beobachten sind.

Das Gemisch wird dann der Polymerisation zugeführt, die im Allgemeinen kontinuierlich und im Wesentlichen nach dem in der DE-A-43 21 683 beschriebenen Verfahren durchgeführt wird. Man polymerisiert vorzugsweise unter solchen Bedingungen, bei denen das Gemisch einphasig und flüssig vorliegt, d. h. bei erhöhter Temperatur und erhöhtem Druck. Im Allgemeinen arbeitet man bei einer Temperatur im Bereich von 230 bis 310 °C, vorzugsweise 240 bis 290 °C, und bei einem Druck im Bereich von 5 bis 40 bar, vorzugsweise 12 bis 20 bar.

Das in dem Gemisch enthaltene Wasser beschleunigt unter den Polymerisationsbedingungen die Polymerisation. Um jedoch hochmolekulares Polyamid zu erhalten, muss der Wassergehalt aber beträchtlich verringert werden. Dies erfolgt durch adiabatische Entspannung des Polymerisationsgemisches, vorzugsweise auf einen Druck im Bereich von 0,1 mbar bis 1,8 bar, insbesondere 1 mbar bis 1,3 bar und besonders bevorzugt Atmosphärendruck. Aufgrund der adiabatischen Entbindung bzw. Verdampfung des Wassers können sich keine Oligomere oder Additive auf Apparaturteilen abscheiden. Sie verbleiben vielmehr in der Polymermatrix gelöst oder suspendiert, so dass ein reibungsloser Ablauf der Polymerisation gewährleistet ist.

Gemäß einer ersten Ausführungsform wird das zu polymerisierende Gemisch auf eine Temperatur im Bereich von 230 bis 310 °C und einen Druck im Bereich von 5 bis 40 bar gebracht, so dass die Polymerisation einsetzt. Nachdem die gewünschte Temperatur und der gewünschte Druck erreicht sind, wird mindestens eine adiabatische Entspannung (wie unten noch näher beschrieben) durchgeführt. Das nach dem Entspannen erhaltene Produkt unterwirft man in mindestens einer Reaktionszone einer drucklosen Nachpolymerisation, gegebenenfalls unter vermindertem Druck, gemäß bekannten Verfahren.

Vorzugsweise wird das nach dem Entspannen erhaltene Produkt jedoch in einer ersten Reaktionszone bei einer Temperatur im Bereich von 230 bis 310 °C und einem Druck im Bereich von 5 bis 40 bar weiterpolymerisiert, anschließend erfolgt eine erneute adiabatische Entspannung und schließlich wird in einer zweiten Reaktionszone wie oben beschrieben nachpolymerisiert. Die Weiterpolymerisation in der ersten Reaktionszone erfolgt im Allgemeinen in einem Reaktionsgefäß, das unten näher beschrieben ist.

Gemäß einer weiteren Ausführungsform bringt man das zu polymerisierende Gemisch auf eine Temperatur von 230 bis 310 °C und einem Druck von 5 bis 40 bar, beispielsweise indem man das Gemisch kontinuierlich innerhalb weniger Minuten über einen beheizten Wärmetauscher schickt. Anschließend wird das Produkt in einer ersten Reaktionszone unter Beibehaltung der Druck- und Temperaturbedingungen anpolymerisiert. Die Polymerisation erfolgt im Allgemeinen in einem Reaktionsgefäß mit Einbauten, beispielsweise einem Rohrreaktor mit Mischelementen. Es können geordnete Mischelemente (z. B. sog. Sulzerpackungen) oder ungeordnete Mischelemente wie Füllkörper (z. B. Raschig-Ringe, Kugeln oder Pallringe) eingesetzt werden. In dieser Reaktionszone findet eine exotherme Polymerisation der Reaktionsmischung statt, wobei aus den zuvor genannten Gründen die Einphasigkeit des Reaktionssystems durch entsprechende Druck- und Temperaturbedingungen sichergestellt wird. Durch die frei werdende Reaktionswärme erhöht sich die Temperatur der Reaktionsmischung im Verlauf der Zone um etwa 10 bis 50 °C.

Die Verweilzeit liegt im Allgemeinen im Bereich von 0,5 bis 3 Stunden, vorzugsweise 1 bis 2 Stunden, so dass der Umsatz mindestens 85 %, bevorzugt mehr als 87 % beträgt.

Das unter Druck stehende Reaktionsgemisch wird anschließend adiabatisch in eine Abscheidezone entspannt. Der Druck in dieser Abscheidezone liegt in der Regel im Bereich von 0,1 mbar bis 1,5 bar, bevorzugt im Bereich von 10 bis 1300 mbar. Bei der Entspannung kommt es zu einer Flashverdampfung des noch im Polymer befindlichen Wassers unter Nutzung der zuvor in der Polymerschmelze gespeicherten Reaktions- bzw. Eigenwärme. Das Reaktionsgemisch kühlt sich dabei auf Temperaturen im Bereich von 220 bis 300 °C, vorzugsweise 230 bis 270 °C ab. Im Gegensatz zu der herkömmlichen Verdampfung des Wassers an einer Wärmetauscherfläche können bei der Flashverdampfung, wie schon erwähnt, aus der Polymermatrix keine Ausscheidungen an Wärmetauscherflächen und sonstigen Apparateoberflächen stattfinden. Eine Belagbildung durch organische oder anorganische Ausscheidungen wird vermieden. Zudem wird die im Prozess freigesetzte Wärme direkt zur Wasserverdampfung genutzt, was eine weitere Energie- und Kostenersparnis bewirkt. Eine Abkühlung des Reaktionsgemisches ist zudem erwünscht, da das Polykondensationsgleichgewicht mit sinkender Temperatur auf die Seite des höhermolekularen Produkts verschoben wird. Der bei der Entspannung freigesetzte Wasserdampf enthält flüchtige Bestandteile wie das Monomer Caprolactam und Oligomere. Durch Rektifikation über eine Kolonne kann der Wasserdampf aus dem System entfernt und die organischen Bestandteile können in den Prozess zurückgeführt werden.

Das bei Einsatz von Caprolactam nach der Abscheidezone erhaltene Polycaprolactam besitzt ein Molekulargewicht im Bereich von 3000 bis 18000 g/mol, bevorzugt 6000 bis 12000 g/mol. Die Schmelzviskosität liegt bei 1 bis 200 Pa·s (bei 270 °C). Die Polymerschmelze wird entweder unmittelbar im Anschluss an die Abscheidezone in eine Nachreaktionszone überführt, in der ein weiterer Molekulargewichtsaufbau stattfindet oder direkt nach üblichen Verfahren stückig gemacht.

Insbesondere, wenn die Wasserkonzentration in der aufkonzentrierten, mit Lactam versetzten Extraktionslösung oberhalb von 8 % liegt, ist die Anwendung einer zwei- oder mehrstufigen Flashverdampfung zweckmäßig. Auf diese Weise vermeidet man ein Absinken der Temperatur der Reaktionsmischung unter die Polymerschmelztemperatur bei der adiabatischen Verdampfung.

Die Mischung aus Konzentrat und Lactam mit einem Wassergehalt von mehr als 8 % wird wie oben beschrieben aufgeheizt und in die erste Reaktionszone geleitet, wo sie sich durch die Reaktion weiter erhitzt. Der Druck wird vorzugsweise wieder so gewählt, dass die Reaktionsmischung einphasig flüssig vorliegt.

Das unter Druck stehende Reaktionsgemisch wird anschließend adiabatisch in eine erste Abscheidezone entspannt, wobei der Druck in dieser Ahscheidezone im Bereich von 6 bis 15 bar, bevorzugt 8 bis 12 bar liegt. Dabei wird ein Teil des im Polymer befindlichen Wassers unter Nutzung der zuvor gespeicherten Reaktions- und Eigenwärme in einer Flashverdampfung entbunden. Das Reaktionsgemisch kühlt sich dabei auf etwa 220 bis 300 °C, vorzugsweise 230 bis 270 °C ab. Die Verweilzeit in der ersten Abscheidezone wählt man im Allgemeinen im Bereich von 10 bis 60 Minuten, vorzugsweise 20 bis 30 Minuten. Anschließend wird die unter Druck stehende Mischung über einen Wärmetauscher geführt und dabei innerhalb weniger Minuten auf Temperaturen im Bereich von 230 bis 310 °C, vorzugsweise 240 bis 290 °C erhitzt. Der Druck wird wiederum vorzugsweise so eingestellt, dass die Reaktionsmischung einphasig flüssig vorliegt, er liegt in der Regel im Bereich von 6 bis 20 bar, vorzugsweise 12 bis 18 bar. Die Reaktionsmischung wird dann in eine zweite Abscheidezone erneut adiabatisch entspannt. Der Druck in der zweiten Abscheidezone wird im Bereich von 10 bis 1300 mbar gewählt. Dieses Verfahren des erneuten Aufheizens der Reaktionsmischung mit anschließender Flashverdampfung kann bei Bedarf wiederholt werden. Die in den verschiedenen Abscheidezonen verdampfte Wassermenge und damit verbundene Temperaturabsenkung kann durch den jeweils eingestellten Druck gezielt beeinflusst werden.

Als Lactam kann man beispielsweise Caprolactam, Önanthlactam, Capryllactam und Lauryllactam sowie deren Mischungen, bevorzugt Caprolactam, einsetzen.

Als weitere Monomereinheiten kann man beispielsweise Dicarbonsäuren, wie Alkandicarbonsäuren mit 6 bis 12 Kohlenstoffatomen, insbesondere 6 bis 10 Kohlenstoffatomen, wie Adipinsäure, Pimelinsäure, Korksäure, Azelainsäure oder Sebazinsäure sowie Terephthalsäure und Isophthalsäure, Diamine, wie C₄-C₁₂-Alkyldiamine, insbesondere mit 4 bis 8 Kohlenstoffatomen, wie Hexamethylendiamin, Tetramethylendiamin oder Octamethylendiamin, ferner m-Xylylendiamin, Bis-(4-aminophenyl)methan, Bis-(4-aminophenyl)propan-2,2 oder Bis-((4-aminocyclohexyl)methan, sowie Mischungen von Dicarbonsäuren und Diaminen, vorteilhaft im äquivalenten Verhältnis, wie Hexamethylendiammoniumadipat, Hexamethylendiammoniumterephthalat oder Tetramethylendiammoniumadipat, bevorzugt Hexamethylendiammoniumadipat und Hexamethylendiammoniumterephthalat, in Mengen im Bereich von 0 bis 60, vorzugsweise von 10 bis 50 Gew.-%, bezogen auf die Gesamtmenge an Monomeren, einsetzen. Besondere technische Bedeutung haben Polycaprolactam und Polyamide, die aus Caprolactam, Hexamethylendiamin sowie Adipinsäure, Isophthalsäure und/oder Terephthalsäure aufgebaut sind, erlangt.

In einer bevorzugten Ausführungsform setzt man Caprolactam und Hexamethylendiammoniumadipat ("AH-Salz") ein, wobei man das AH-Salz als wässrige Lösung verwendet. Üblicherweise wählt man das Molverhältnis von Caprolactam zu AH-Salz im Bereich von 99,95:0,05 bis 80:20, bevorzugt von 95:5 bis 85:15.

Als übliche Zusatz- und Füllstoffe kann man Pigmente, wie Titandioxid, Siliciumdioxid oder Talk, Kettenregler, wie aliphatische und aromatische Carbon- und Dicarbonsäuren, wie Propionsäure oder Terephthalsäure, Stabilisatoren, wie Kupfer(I)halogenide und Alkalimetallhalogenide, Nukleierungsmittel, wie Magnesiumsilikat oder Bornitrid, Katalysatoren, wie phosphorige Säure, sowie Antioxidantien in Mengen im Bereich von 0 bis 5 Gew.-%, bevorzugt von 0,05 bis 1 Gew.-%, bezogen auf die Gesamtmenge an Monomeren, einsetzen. Die Additive setzt man in der Regel vor dem Granulieren und vor, während oder nach, bevorzugt nach der Polymerisation zu.

Das erfindungsgemäß erhaltene Polymer kann dann nach üblichen Verfahren weiter verarbeitet werden, beispielsweise kann es nach üblichen Methoden stückig gemacht werden, indem man es in Form von Schmelzprofilen austrägt, anschließend durch ein Wasserbad leitet und hierbei abkühlt und dann granuliert. Das Granulat kann man dann nach an sich bekannten Methoden extrahieren und anschließend oder gleichzeitig zu hochmolekularem Polylactam umsetzen. Die Extraktion kann beispielsweise mit Wasser oder wässriger Caprolactamlösung erfolgen. Eine weitere Möglichkeit ist die Gasphasenextraktion, siehe EP-A-284 968. Die gewünschte Viskositätszahl des Endproduktes liegt in der Regel im Bereich von 120 bis 350 ml/g. Sie kann in an sich bekannter Weise eingestellt werden.

### Kurzbeschreibung der Figuren:

- Fig. 1: zeigt schematisch eine Ausführungsform des erfindungsgemäßen Verfahrens mit einstufiger Flashverdampfung;
- Fig. 2: zeigt schematisch die in Fig. 1 beschriebene Ausführungsform, jedoch mit zweistufiger Flashverdampfung.

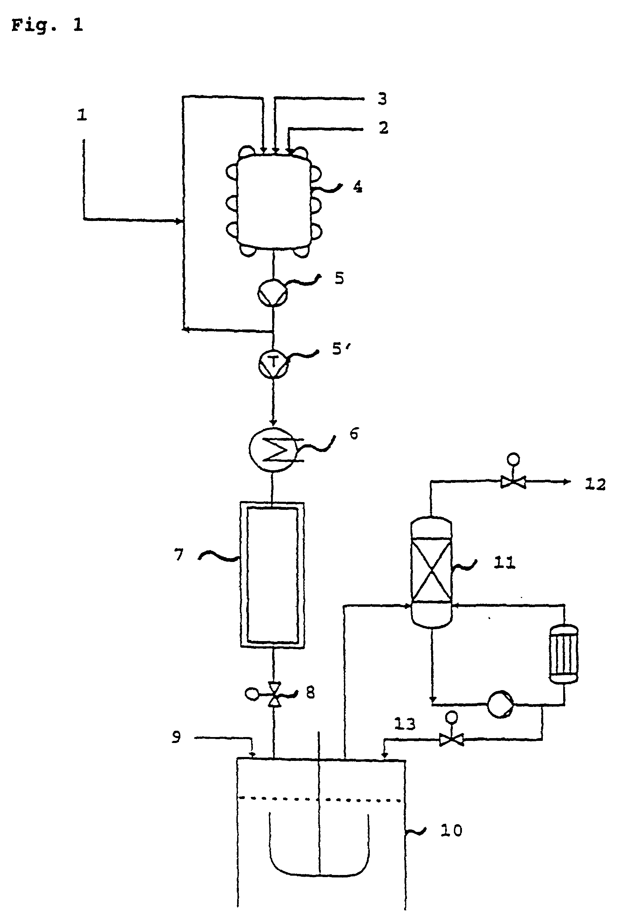

In der Figur 1 ist beispielhaft eine Ausführungsform des erfindungsgemäßen Verfahrens schematisch dargestellt. Über 1 wird ein auf einen Gehalt von 70 bis 85 % aufkonzentrierter Extrakt in einen beheizten Mischbehälter 4 geleitet. Der Extrakt wird dann im Verhältnis 1:6 mit reinem Caprolactam 2 und gegebenenfalls Kettenregler und anderen Additiven 3 in dem beheizten Mischbehälter 4 vermischt, indem die Mischung mittels einer Pumpe 5 umgewälzt wird. Über die Pumpe 5' wird das Gemisch dem Wärmetauscher 6 und der Reaktionszone 7 zugeführt und zugleich der gewünschte Druck von 5 bis 40 bar erzeugt. Die Aufheizung auf Temperaturen von 220 bis 300 °C erfolgt dann in dem Wärmetauscher 6. In der ersten Reaktionszone 7 wird die Reaktionsmischung polymerisiert. Der Druck wird dabei so eingestellt, dass die Lösung bei der verwendeten Temperatur einphasig flüssig vorliegt. Durch die exotherme Polymerisation steigt die Temperatur der Reaktionsmischung bis zum Ende der ersten Reaktionszone 7 um etwa 20 bis 50°C an, wobei die Reaktionsmischung einphasig flüssig bleibt. Der Wassergehalt von 2 bis 7 % beschleunigt die Polymerisation, so dass nach etwa 1 h ein Umsatz von >87 % erreicht wird. Das erzeugte Präpolymer wird dann über ein Ventil 8 der Flashverdampfung unter Entbindung des überwiegenden Teils des Wassers unterzogen. Bei dieser adiabatischen Entspannung kühlt sich das Präpolymer pro 1 % entbundenem Wasser um etwa 6 bis 7 °C ab. Gegebenenfalls nach Zusatz von weiterem Caprolactam und anderen geeigneten Monomeren und sonstigen Additiven durch eine Schleuse 9 wird die Polymerisation in der Regel anschließend bei etwa Atmosphärendruck und einem Wassergehalt von < 0,4 % in der Nachkondensationszone 10 weitergeführt. Der bei 8 entbundene Wasserdampf wird in einer Kolonne 11 von den enthaltenen, flüchtigen organischen Bestandteilen getrennt und bei 12 abgeführt. Die organischen Bestandteile werden bei 13 in den Prozess zurückgeführt. Das aus der Nachkondensationszone 10 ausgetragene Polyamid kann dann auf bekannte Weise weiterverarbeitet werden.

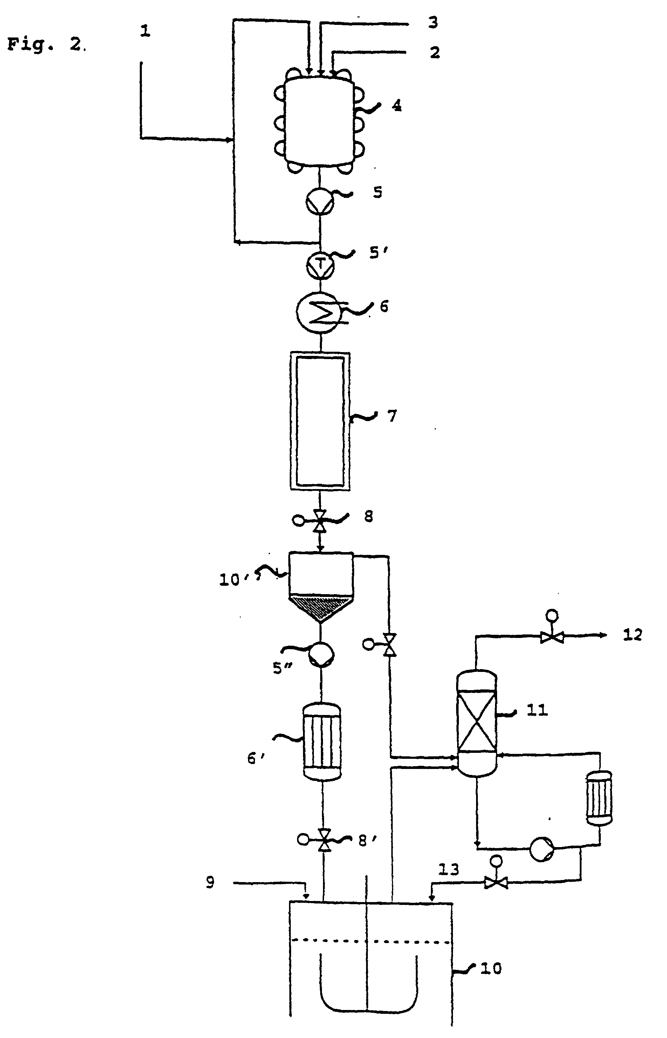

Die Figur 2 zeigt schematisch eine Ausführungsform des erfindungsgemäßen Verfahrens zur Extraktwasserrückführung bei Extraktwasserkonzentraten mit erhöhtem Wassergehalt. Es wird eine zweistufige Flashverdampfung anstelle der in Figur 1 gezeigten einstufigen verwendet. Das aufkonzentrierte Extraktwasser 1 wird wie oben in einem beheizten Behälter 4 mit Caprolactam 2 und gegebenenfalls Additiven 3 vermischt. Der Wassergehalt im Behälter 4 beträgt >8 %. Dies kann z. B. bei einer geringeren Aufkonzentrierung oder bei vermehrter Extraktwasserrückführung auftreten. Dann wird nach dem Vermischen im Behälter 4, Aufheizen im Wärmetauscher 6 und Polymerisieren in der ersten Reaktionszone 7 die adiabate Entspannung bei 8 in eine erste Abscheidezone 10' auf einen Druck von 6 bis 15 bar vorgenommen. Anschließend wird nochmals mit einer Pumpe 5" und einem Wärmetauscher 6' auf 230 bis 310 °C und 6 bis 20 bar eingestellt. Bei 8' erfolgt eine weitere adiabate Entspannung in eine Nachkondensationszone 10 auf 10 bis 1300 mbar, indem die Polymerisation, gegebenenfalls nach Zusatz weiterer Monomere und/oder Additive, bei 9 weitergeführt wird. Von dem entbundenen Wasserdampf werden in einer Kolonne 11 die flüchtigen organischen Bestandteile abgetrennt, die bei 13 in den Prozess zurückgeführt werden, während der Wasserdampf bei 12 entfernt wird. Das aus der Nachkondensationszone 10 ausgetragene Polyamid kann dann auf bekannte Weise weiterverarbeitet werden.

Die folgenden Beispiele sollen das erfindungsgemäße Verfahren veranschaulichen. Soweit nicht anders angegeben, beziehen sich im Rahmen der vorliegenden Anmeldung alle Mengen- bzw. Prozentangaben auf das Gewicht.

### Beispiel 1

22,5 kg/h unextrahiertes Polyamid 6-Granulat, das unter Zusatz von 0,3 % vorbehandeltem Titandioxid als Weißpigment hergestellt wurde, werden im Gegenstrom mit 22,5 kg/h heißem Wasser extrahiert. Die resultierende 10 %-ige wässrige Extraktlösung enthält neben ca. 7,5 % Caprolactam-Monomer und ca. 2,5 % Oligomeren auch Spuren an anorganischen Verbindungen (Silicium-, Mangan-, Phosphor- und Aluminiumverbindungen) in der Größenordnung von 1 bis 8 ppm, die aus der Vorbehandlung des Titandioxids stammen. Die heiße Extraktlösung wird in einer einstufigen Eindampfanlage bei Temperaturen von 108 °C auf einen Gehalt an organischen und anorganischen Bestandteilen von 78 % aufkonzentriert. Wie in Fig. 1 gezeigt, wird die heiße Lösung 1 mit einem Durchsatz von 3,2 kg/h in einen beheizten Mischbehälter 4 gepumpt und dort mit 20 kg/h Frischlactam 2 vermischt. Die Vermischung wird durch Umpumpen der Lösung erzielt. Die Umwälzrate liegt bei 2-3 m³/h. Im Mischbehälter 4 stellt sich eine Temperatur von 90-95 °C und eine Wasserkonzentration von 3,0 % ein. Durch die Umwälzung und insbesondere durch den hohen Lactamüberschuss wird eine stabile einphasige Lösung erhalten, und die Bildung von organischen Ausscheidungen wird vermieden. Die Reaktionslösung wird über eine Pumpe 5' mit einem Durchsatz von 23,2 kg/h einem beheizten Wärmetauscher 6 mit einer Austauschfläche von 6 m² und einer Eingangstemperatur von 270 °C zugeführt und innerhalb von 2 Minuten auf eine Temperatur von 260 °C aufgeheizt. Auf der Druckseite der Pumpe 5' wird ein Druck von 17 bar eingestellt, um die Einphasigkeit des Reaktionssystems sicherzustellen. Die aufgeheizte Reaktionsmischung wird anschließend durch ein beheiztes, zylindrisches Rohr 7 mit einem Innendurchmesser von 120 mm und einer Länge von 2500 mm gepumpt, das mit 5-mm-Raschig-Ringen mit Steg gefüllt ist und eine Manteltemperatur von 270 °C besitzt. Die Verweilzeit im Rohr beträgt 1,1 h. Die Produkttemperatur am Rohrende liegt bei 275 °C. Das unter einem Druck von ca. 17 bar stehende Reaktionsgemisch wird am Rohrende über ein Regelventil 8 kontinuierlich in ein beheiztes zylindrisches Abscheidegefäß 10 auf Atmosphärendruck entspannt. Das Reaktionsgemisch wird dabei zweiphasig und das enthaltene Wasser wird unter Nutzung der Eigenwärme der Polymerschmelze verdampft. Die Temperatur der Polymerschmelze sinkt daher um 15 °C auf 260 °C ab. Die bei der Entspannung freigesetzten Brüden werden über eine Füllkörperkolonne 11 mit 6 theoretischen Böden geführt und rektifiziert. Der Wasserdampf 12 wird über den Kolonnenkopf aus dem System ausgeschleust, während Caprolactam-Monomer und -Oligomere als Sumpfprodukt 13 in den Abscheider 10 zurückgeführt werden. Der am Kopf entnommene Wasserdampf 12 enthält weniger als 0,1 % Caprolactam. In das gerührte Abscheidegefäß 10 wird über eine Schleuse 9 vorbehandeltes Titandioxid als Weißpigment-Konzentrat in Polyamid 6 zugegeben und gleichmäßig eingemischt. Nach einer Verweilzeit von 10 h im Abscheidegefäß 10, das gleichzeitig als Nachreaktionszone dient, wird das Polymer kontinuierlich mit einer Schmelzepumpe aus dem Sumpf des Nachreaktors über eine Düse in ein Wasserbad in Form von Schmelzprofilen ausgetragen, im Wasserbad verfestigt und granuliert.

Das so hergestellte Polymer besitzt eine Viskositätszahl (gemessen als 0,5 gew.-%ige Lösung in 96 gew.-%iger Schwefelsäure bei 25 °C) von 115 ml/g und einen Gehalt an niedermolekularen Bestandteilen von 11 %. Der Titandioxidgehalt beträgt 0,3 %. Es wird anschließend im Gegenstrom mit heißem Wasser extrahiert und daraufhin getrocknet und solange getempert, bis eine Viskositätszahl von 130 ml/g erreicht ist.

Die in der Extraktionsstufe anfallenden verdünnten Extraktwässer werden gemäß dem zuvor beschriebenen Verfahren aufkonzentriert und in die Polymerisationsstufe zurückgeführt.

### Beispiel 2

22,5 kg/h unextrahiertes Polyamid 6 - Granulat, das unter Zusatz von 0,3 % vorbehandeltem Titandioxid als Weißpigment hergestellt wurde, werden im Gegenstrom mit 22,5 kg/h heißem Wasser extrahiert. Die resultierende 10 %-ige wäßrige Extraktlösung enthält neben ca. 7,5 % Caprolactam-Monomer und ca 2,5 % Oligomeren auch Spuren an anorganischen Verbindungen (Silicium-, Mangan-, Phosphor- und Aluminiumverbindungen), die aus der Vorbehandlung des Titandioxids stammen. Die heiße Extraktlösung wird zur Stabilisierung gegen Oligomerausscheidungen mit 1,2 kg/h Frischlactam verdünnt und anschließend in einer einstufigen Eindampfanlage bei Temperaturen von 109 °C auf einen Gehalt an organischen und anorganischen Bestandteilen von 84 % aufkonzentriert. Die heiße Lösung 1 wird mit einem Durchsatz von 4,4 kg/h in einen beheizten Mischbehälter 4 gepumpt und dort mit weiteren 18,8 kg/h Frischlactam 2 vermischt. Die Vermischung wird durch Umpumpen der Lösung erzielt. Die Umwälzrate beträgt 2-3 m³/h. Im Mischbehälter 4 stellt sich eine Temperatur von 90-95 °C und eine Wasserkonzentration von 3,0 % ein. Durch die Umwälzung und insbesondere durch den hohen Lactamüberschuss wird eine stabile einphasige Lösung erhalten, und die Bildung von organischen Ausscheidungen wird vermieden. Die Reaktionslösung wird über eine Pumpe 5' mit einem Durchsatz von 23,2 kg/h einem beheizten Wärmetauscher 6 mit einer Austauschfläche von 6 m² und einer Eingangstemperatur von 270 °C zugeführt und innerhalb von 2 Minuten auf eine Temperatur von 260 °C aufgeheizt. Auf der Druckseite der Pumpe 5' wird ein Druck von 17 bar eingestellt, um die Einphasigkeit des Reaktionssystems sicherzustellen. Die aufgeheizte Reaktionsmischung wird anschließend durch ein beheiztes, zylindrisches Rohr 7 mit einem Innendurchmesser von 120 mm und einer Länge von 2500 mm gepumpt, das mit 5-mm-Raschig-Ringen mit Steg gefüllt ist und eine Manteltemperatur von 270 °C besitzt. Die Verweilzeit im Rohr 7 beträgt 1,1 h. Die Produkttemperatur am Rohrende liegt bei 275 °C. Das unter einem Druck von ca. 17 bar stehende Reaktionsgemisch wird am Rohrende über ein Regelventil 8 kontinuierlich in ein beheiztes, zylindrisches Abscheidegefäß 10 auf Atmosphärendruck entspannt. Das Reaktionsgemisch wird dabei zweiphasig und das enthaltene Wasser wird unter Nutzung der Eigenwärme der Polymerschmelze verdampft. Die Temperatur der Polymerschmelze sinkt daher um 14 °C auf 261 °C ab. Die bei der Entspannung freigesetzten Brüden werden über eine Füllkörperkolonne 11 mit 6 theoretischen Böden geführt und rektifiziert. Der Wasserdampf 12 wird über den Kolonnenkopf aus dem System ausgeschleust, während Caprolactam-Monomer und -Oligomere als Sumpfprodukt 13 in den Abscheider 10 zurückgeführt werden. Der am Kopf entnommene Wasserdampf 12 enthält weniger als 0,1 % Caprolactam. In das gerührte Abscheidegefäß 10 wird über eine Schleuse 9 vorbehandeltes Titandioxid als Weißpigment-Konzentrat in Polyamid 6 zugegeben und gleichmäßig eingemischt. Nach einer Verweilzeit von 10 h im Abscheidegefäß 10, das gleichzeitig als Nachreaktionszone dient, wird das Polymer kontinuierlich mit einer Schmelzepumpe aus dem Sumpf des Nachreaktors über eine Düse in ein Wasserbad in Form von Schmelzprofilen ausgetragen, im Wasserbad verfestigt und granuliert.

Das so hergestellte Polymer besitzt eine Viskositätszahl (gemessen als 0,5 gew.-%ige Lösung in 96 gew.-%iger Schwefelsäure bei 25 °C) von 117 ml/g und einen Gehalt an niedermolekularen Bestandteilen von 10,8 %. Der Titandioxidgehalt beträgt 0,3 %. Es wird anschließend im Gegenstrom mit heißem Wasser extrahiert und daraufhin getrocknet und solange getempert, bis eine Viskositätszahl von 127 ml/g erreicht ist.

Die in der Extraktionsstufe anfallenden verdünnten Extraktwässer werden gemäß dem zuvor beschriebenen Verfahren aufkonzentriert und in die Polymerstufe zurückgeführt.

Der in den Beispielen 1) und 2) beschriebene Prozeß wurde kontinuierlich mit geschlossenen Kreisläufen über einen Zeitraum von 12 Wochen betrieben, was einer mittleren Anzahl von ca. 50 Rückführzyklen des Extraktkonzentrats in die Polymerisation entspricht. Dabei wurden keinerlei Ausscheidungen von organischen oder anorganischen Bestandteilen während des Prozesses, insbesondere an Wärmetauscherflächen, beobachtet.

## Patentansprüche

1. Verfahren zur Herstellung von Polyamiden aus mindestens einem Lactam und gegebenenfalls weiteren Monomeren und üblichen Zusatz- und Füllstoffen, **dadurch gekennzeichnet, dass** man
a) das Extraktwasser aus der Extraktion von Polyamid auf einen Extraktgehalt von höchstens 85 Gew.-% aufkonzentriert,
b) den Wassergehalt des erhaltenen Konzentrates durch Zugabe von frischem Lactam auf 0,5 bis 13 Gew.-% einstellt.
c) das erhaltene Gemisch der Polymerisation unter polyamidbildenden Bedingungen unterwirft und
d) während der Polymerisation mindestens eine adiabatische Entspannung zur Verringerung des Wassergehaltes vornimmt.

2. verfahren nach Anspruch 1, **dadurch gekennzeichnet, dass** man das Extraktwasser auf einen Extraktgehalt von 70 bis 85 Gew.-% aufkonzentriert.

3. Verfahren nach Anspruch 1 oder 2, **dadurch gekennzeichnet, dass** das Extraktwasser aus der Extraktion von pigmenthaltigem Polyamid stammt.

4. Verfahren nach einem der vorhergehenden Ansprüche, **dadurch gekennzeichnet, dass** man einen Teil des in Stufe b) zugegebenen, frischen Lactams vor der Aufkonzentrierung zugibt.

5. Verfahren nach einem der vorhergehenden Ansprüche, **dadurch gekennzeichnet, dass** der Wassergehalt in Stufe b) auf 0,5 bis 10 Gew.-%, vorzugsweise 0,8 bis 7 Gew.-% und insbesondere 2 bis 4 Gew.-%, eingestellt wird.

6. Verfahren nach Anspruch 1, **dadurch gekennzeichnet, dass** man das Gemisch in Stufe c) auf eine Temperatur im Bereich von 230 bis 310 °C und einen Druck im Bereich von 5 bis 40 bar bringt, anschließend mindestens eine adiabatische Entspannung vornimmt und das nach dem Entspannen erhaltene Produkt in mindestens einer Reaktionszone nachpolymerisiert.

7. Verfahren nach Anspruch 6, **dadurch gekennzeichnet, dass** man das nach dem Entspannen erhaltene Produkt in einer ersten Reaktionszone bei einer Temperatur im Bereich von 230 bis 310 °C und einem Druck im Bereich von 5 bis 40 bar weiterpolymerisiert, anschließend erneut eine adiabatische Entspannung vornimmt und schließlich in einer zweiten Reaktionszone nachpolymerisiert.

8. Verfahren nach Anspruch 1, **dadurch gekennzeichnet, dass** man das aus Stufe b) erhaltene Gemisch in einer ersten Reaktionszone bei einer Temperatur im Bereich von 230 bis 310 °C und einem Druck im Bereich von 5 bis 40 bar polymerisiert, anschließend adiabatisch entspannt und in einer weiteren Reaktionszone nachpolymerisiert.

9. Verfahren nach einem der Ansprüche 6 bis 8, **dadurch gekennzeichnet, dass** man die adiabatische Entspannung auf einen Druck im Bereich von 0,1 mbar bis 1,5 bar durchführt.

10. Verfahren nach Anspruch 8, **dadurch gekennzeichnet, dass** man das aus Stufe b) erhaltene Gemisch in einer ersten Reaktionszone bei einer Temperatur im Bereich von 230 bis 310 °C und einem Druck im Bereich von 5 bis 40 bar polymerisiert, anschließend eine adiabatische Entspannung auf einen Druck im Bereich von 6 bis 15 bar vornimmt, das entspannte Produkt erneut auf eine Temperatur im Bereich von 230 bis 310 °C und einen Druck im Bereich von 5 bis 40 bar bringt, dann einer weiteren adiabatischen Entspannung auf einen Druck im Bereich von 0,1 mbar bis 1,5 bar unterwirft und schließlich nachpolymerisiert.

11. Verfahren nach einem der Ansprüche 6 bis 10, **dadurch gekennzeichnet, dass** man die Nachpolymerisation bei einer um 5 bis 20 °C niedrigeren Temperatur als die vorausgehende Polymerisation und insbesondere bei 260 bis 270 °C durchführt.

12. Verfahren nach einem der vorhergehenden Ansprüche, **dadurch gekennzeichnet, dass** man als Lactam Caprolactam verwendet.

## Claims

1. A process for preparing polyamides from at least one lactam with or without further monomers and customary additives and fillers, which comprises
a) concentrating the wash water extract from the extraction of polyamide to an extractables content of not more than 85% by weight,
b) adjusting the water content of the resulting concentrate to from 0.5 to 13% by weight by addition of fresh lactam,
c) subjecting the resulting mixture to a polymerization under polyamide-forming conditions, and
d) effecting at least one adiabatic expansion during the polymerization to reduce the water content.

2. A process as claimed in claim 1, wherein the wash water extract is concentrated to an extractables content of from 70 to 85% by weight.

3. A process as claimed in claim 1 or 2, wherein the wash water extract comes from the extraction of pigmented polyamide.

4. A process as claimed in any of the preceding claims, wherein a portion of the fresh lactam added in step b) is added prior to said concentrating.

5. A process as claimed in any of the preceding claims, wherein the water content is adjusted to from 0.5 to 10% by weight, preferably to from 0.8 to 7% by weight, especially to from 2 to 4% by weight, in step b).

6. A process as claimed in claim 1, wherein the mixture in step c) is brought to a temperature within the range from 230 to 310°C and to a pressure within the range from 5 to 40 bar, then at least one adiabatic expansion is effected, and the product obtained after said expansion is postpolymerized in at least one reaction zone.

7. A process as claimed in claim 6, wherein the product obtained after said expansion is further polymerized in a first, reaction zone at a temperature within the range from 230 to 310°C and at a pressure within the range from 5 to 40 bar, then subjected to another adiabatic expansion and finally postpolymerized in a second reaction zone.

8. A process as claimed in claim 1, wherein the mixture obtained from step b) is polymerized in a first reaction zone at a temperature within the range from 230 to 310°C and at a pressure within the range from 5 to 40 bar, then adiabatically expanded and postpolymerized in a further reaction zone.

9. A process as claimed in any of claims 6 to 8, wherein said adiabatic expansion is carried out to a pressure within the range from 0.1 mbar to 1.5 bar.

10. A process as claimed in claim 8, wherein the mixture obtained from step b) is polymerized in a first reaction zone at a temperature within the range from 230 to 310°C and at a pressure within the range from 5 to 40 bar, then an adiabatic expansion is effected to a pressure within the range from 6 to 15 bar, and the expanded product is again brought to a temperature within the range from 230 to 310°C and to a pressure within the range from 5 to 40 bar, then subjected to a further adiabatic expansion to a pressure within the range from 0.1 mbar to 1.5 bar and finally postpolymerized.

11. A process as claimed in any of claims 6 to 10, wherein the postpolymerization is carried out at a temperature which is from 5 to 20°C lower than that of the preceding polymerization, especially at from 260 to 270°C.

12. A process as claimed in any of the preceding claims, wherein the lactam used is caprolactam.

## Revendications

1. Procédé de préparation de polyamides à partir d'au moins un lactame et éventuellement d'autres monomères et d'additifs et de charges usuels, **caractérisé en ce que**
a) l'eau d'extraction provenant de l'extraction de polyamide est concentrée à une teneur en extrait d'un maximum de 85% en poids,
b) la teneur en eau du concentré obtenu est ajustée à une valeur de 0,5 à 13% en poids par addition de lactame frais,
c) le mélange obtenu est soumis à la polymérisation dans des conditions de formation de polyamide, et
d) pendant la polymérisation, on entreprend au moins une détente adiabatique afin de réduire la teneur en eau.

2. Procédé selon la revendication 1, **caractérisé en ce que** l'on concentre l'eau d'extraction à une teneur en extrait de 70 à 85% en poids.

3. Procédé selon la revendication 1 ou 2, **caractérisé en ce que** l'eau d'extraction provient de l'extraction de polyamide contenant des pigments.

4. Procédé selon l'une des revendications qui précèdent, **caractérisé en ce que** l'on ajoute avant la concentration une partie du lactame frais ajouté à l'étape b).

5. Procédé selon l'une des revendications qui précèdent, **caractérisé en ce que** la teneur en eau à l'étape b) est ajustée à une valeur de 0,5 à 10% en poids, de préférence de 0,8 à 7% en poids et en particulier de 2 à 4% en poids.

6. Procédé selon la revendication 1, **caractérisé en ce que** le mélange est porté dans l'étape c) à une température de l'ordre de 230 à 310°C et une pression de l'ordre de 5 à 40 bar, que l'on entreprend ensuite au moins une détente adiabatique et que l'on post-polymérise le mélange obtenu après détente dans au moins une zone réactionnelle.

7. Procédé selon la revendication 6, **caractérisé en ce que** l'on poursuit la polymérisation du produit obtenu après détente dans une première zone réactionnelle à une température de 230 à 310°C et une pression de l'ordre de 5 à 40 bar, que l'on entreprend ensuite à nouveau une détente adiabatique et que l'on post-polymérise enfin dans une deuxième zone réactionnelle.

8. Procédé selon la revendication 1, **caractérisé en ce que** l'on polymérise le mélange obtenu à l'étape b) dans une première zone réactionnelle à une température de 230 à 310°C et une pression de l'ordre de 5 à 40 bar, que l'on opère ensuite une détente adiabatique et que l'on post-polymérise dans une autre zone réactionnelle.

9. Procédé selon l'une des revendications 6 à 8, **caractérisé en ce que** l'on entreprend la détente adiabatique à une pression de l'ordre de 0,1 mbar à 1,5 bar.

10. Procédé selon la revendication 8, **caractérisé en ce que** le mélange obtenu à l'étape b) est polymérisé dans une première zone réactionnelle à une température de 230 à 310°C et une pression de l'ordre de 5 à 40 bar, que l'on opère ensuite une détente adiabatique à une pression de l'ordre de 6 à 15 bar, que l'on porte à nouveau le produit détendu à une température de 230 à 310°C et une pression de l'ordre de 5 à 40 bar, que l'on opère alors une autre détente adiabatique à une pression de l'ordre de 0,1 mbar à 1,5 bar et que l'on poursuit alors la polymérisation.

11. Procédé selon l'une des revendications 6 à 10, **caractérisé en ce que** l'on entreprend la post-polymérisation à une température de 5 à 20°C inférieure à celle de la polymérisation précédente et en particulier à une température de 260 à 270°C.

12. Procédé selon l'une des revendications qui précèdent, **caractérisé en ce que** le lactame utilisé est du caprolactame.
